# EUROPEAN PATENT SPECIFICATION

(11) **EP 4 788 930 B1**
(45) Date of publication and mention of the grant of the patent: **02.12.2026**
(21) Application number: 24787404.3
(22) Date of filing: 01.10.2024
(51) Int. Cl.: F03D 7/02, F03D 7/04

(54) **INDIVIDUAL PITCH CONTROL FOR WIND TURBINE TOWER FATIGUE REDUCTION**
INDIVIDUELLE NEIGUNGSSTEUERUNG ZUR ERMÜDUNGSVERRINGERUNG EINES WINDTURBINENTURMS
COMMANDE DE PAS INDIVIDUEL POUR RÉDUCTION DE FATIGUE DE TOUR D'ÉOLIENNE

(30) Priority: 03.10.2023 DK PA202330245
(43) Date of publication of application: 12.08.2026
(73) Proprietor: VESTAS WIND SYSTEMS A/S, 8200 Aarhus N (DK)
(72) Inventor: GILES, Alexander Duncan, 8200 Aarhus N (DK); MARTINS CUNHA, Bruno, 8200 Aarhus N (DK); VANELLI, Thea, 8200 Aarhus N (DK); THOMSEN, Jesper Sandberg, 8200 Aarhus N (DK)
(74) Representative: Vestas Patents Department
(86) International application number: PCT/DK2024/050232
(87) International publication number: WO 2025/073327

(56) References cited:
- WO-A1-2023/072355
- WO-A1-2023/110040

## Description

### FIELD OF THE INVENTION

The invention relates to individual pitch control of rotor blades of a wind turbine, the individual pitch control being for reducing fatigue loading of a tower of the wind turbine. In particular, the invention relates to providing individual pitch control to disrupt 3P frequency content in oscillations of the tower, specifically when the 3P frequency content is close to natural frequency content of the tower.

### BACKGROUND

Wind turbines as known in the art include a wind turbine tower supporting a nacelle and a rotor with a number of - typically, three - pitch-adjustable rotor blades mounted thereto. A wind turbine is prone to vibrations, such as tower, nacelle, or rotor blade movement. It is known that certain types of vibrations may be damped by active pitching of the rotor blades or adjusting generator torque. Control strategies for adjusting blade pitch can be used to maximise energy production of a wind turbine while minimising loads experienced by various components of the wind turbine.

Rotor blades may be adjusted as part of a collective pitch control routine, in which each of the (three) blades are adjusted in the same way at the same time. Collective pitch control may be used to control wind turbine speed, for instance. Rotor blades may also be adjusted as part of an individual pitch control routine, in which each blade has its own individual pitch reference, possibly as an adjustment to a collective pitch reference from a collective pitch controller. Collective and individual pitch control may be used to alleviate loads on components of the wind turbine, e.g. caused by rotational sampling of the wind field in the vicinity of the wind turbine as the rotor rotates.

The rotational frequency of the rotor - i.e. the frequency with which a complete rotation of the rotor is completed - may be referred to as a 1P frequency. The frequency at which a rotor blade passes the tower for a wind turbine with three blades may be referred to as 3P, which may then result in oscillations of the tower comprising 3P frequency content.

In certain wind turbine control schemes, e.g. to maximise energy production, it may be necessary to operate the wind turbine at a rotor speed that results in the 3P frequency coinciding with, or being close to, a natural frequency such as a tower first mode or a coupled mode. This coincidence of frequencies can cause excitations of the tower, resulting in tower fatigue. In certain systems, such as floating wind turbine systems, this can be the case when the rotor approaches its nominal speed. As a wind turbine rotor will be operated at nominal speed for significant regions of wind turbine operation, e.g. in a full-load region above a rated wind speed, then a margin between the 3P frequency and a natural mode may be relatively small for significant periods of wind turbine operation, meaning that the tower may accrue significant fatigue through prolonged excitations local to a natural mode.

Some existing approaches for addressing this issue are disadvantageous in that they are relatively inefficient, i.e. a relatively high level of load reduction control is needed to achieve significant tower fatigue reduction. Some other existing approaches are disadvantageous in that they are relatively ineffective for at least some wind turbine configurations.

WO2023/110040 A1 discloses adjusting pitch of the wind turbine rotor blades to reduce fatigue of the wind turbine tower based on flap loading sensor data 3P frequency content. WO2023/072355 A1 discloses adjusting pitch of the wind turbine rotor blades for mitigating the whirling mode caused by edgewise vibrations of the rotor blades.

It is against this background to which the present invention is set.

### SUMMARY OF THE INVENTION

According to an aspect of the invention there is provided a controller for a wind turbine having three rotor blades. The controller is for adjusting individual pitch of the three rotor blades. The controller is configured to receive a sensor signal indicative of acceleration of a tower of the wind turbine in a fore-aft direction of the wind turbine. The sensor signal is received from one or more sensors at a top of the tower or in a nacelle of the wind turbine. The controller is configured to determine a frequency signal in a fixed coordinate frame of the wind turbine that includes frequency content in the received sensor signal that is in a defined frequency region. The defined frequency region includes 3P frequency content and tower natural frequency content. The controller is configured to generate, based on the frequency signal, a pair of mutually orthogonal signals in the fixed coordinate frame. Generating the pair of mutually orthogonal signals comprises filtering to retain frequency content in the frequency signal corresponding to 2P cyclic pitch, and frequency content corresponding to tower-1P cyclic pitch. The tower-1P frequency content - i.e. the frequency content corresponding to cyclic pitching at tower-1P ('tower-1P cyclic pitch') - has a frequency of the tower natural frequency minus 1P. The controller is configured to apply a control action to the pair of mutually orthogonal signals to obtain a pair of mutually orthogonal control signals for mitigating target frequency content in the tower. The target frequency content is the frequency content that is to be targeted, e.g. 3P frequency content. The controller is configured to apply an inverse m-blade coordinate transformation to the pair of mutually orthogonal control signals to obtain individual pitch reference offset values for the respective rotor blades in a rotor coordinate frame of the wind turbine. The controller is configured to transmit a control signal to adjust pitch of the rotor blades based on the obtained individual pitch reference offset values.

The received sensor signal may be indicative of an acceleration of the tower in a side-side direction of the wind turbine.

The controller may be configured to phase shift the pair of mutually orthogonal control signals about a phase angle prior to the inverse m-blade coordinate transformation being applied.

The phase angle may be defined based on an operating condition of the wind turbine. Optionally, the operating condition may be a function of one or more of: pitch angle of the rotor blades; the speed of rotation of the rotor; wind speed in the vicinity of the wind turbine; and, if the wind turbine is an offshore wind turbine, a misalignment between wind direction and wave direction in the vicinity of the wind turbine.

The controller may be configured to apply an amplitude-limiting factor to the pair of mutually orthogonal phase-shifted control signals prior to the inverse m-blade coordinate transformation being applied.

The amplitude-limiting factor may be determined based on a pump capacity of a hydraulic pitch system of the wind turbine for adjusting pitch of the rotor blades.

To generate the pair of mutually orthogonal signals, the controller may be configured to apply a rotation operation to the frequency signal to obtain a rotated signal. The controller may be configured to apply a low pass filter to the rotated signal to retain frequency content corresponding to 2P cyclic pitch and frequency content corresponding to tower-1P cyclic pitch. The controller may be configured to apply an inverse rotation operation to the filtered signal to obtain the pair of mutually orthogonal signals.

A frequency of a rotation angle used in the rotation operation may be 3P. Alternatively, a frequency of a rotation angle used in the rotation operation may be the tower natural frequency. Further alternatively, a frequency of a rotation angle used in the rotation operation may be a coupled mode frequency between the tower and a floating platform to which the tower is coupled.

If a rotating angle rotating at a frequency of 3P is used, the rotated signal will comprise 0P frequency content and 6P frequency content arising from 3P frequency content in the frequency signal. The low pass filter may be applied to remove the 6P frequency content to obtain the filtered signal. With the same rotation operation, i.e. at a frequency of 3P, frequency content in the frequency signal at the tower natural frequency will appear at tower-3P and tower+3P in the rotated signal. The low pass filter may therefore be applied to remove the tower+3P frequency content, while retaining the tower-3P frequency content in the filtered signal.

The controller may be configured to generate, based on the frequency signal, a second pair of mutually orthogonal signals in the fixed coordinate frame. Generating the second pair of mutually orthogonal signals may include filtering to retain frequency content corresponding to 4P cyclic pitch, and frequency content corresponding to tower+1P cyclic pitch, in the frequency signal. The frequency content corresponding to tower+1P cyclic pitch has a frequency of the tower natural frequency plus 1P. The controller may be further configured to apply a second control action to the second pair of mutually orthogonal signals to obtain a second pair of mutually orthogonal control signals for mitigating target frequency content in the tower. The controller may be configured to combine the second pair of mutually orthogonal control signals with the pair of mutually orthogonal control signals to obtain a combined pair of mutually orthogonal control signals. The inverse m-blade coordinate transformation may be applied to the combined pair of mutually orthogonal control signals to obtain the individual pitch reference offset values.

Optionally, to generate the second pair of mutually orthogonal signals, the controller may be configured to apply a second rotation operation to the frequency signal to obtain a second rotated signal. The second rotation operation may be in an opposite direction to the rotation operation. The controller may be configured to apply a second low pass filter to the second rotated signal to retain frequency content corresponding to 4P cyclic pitch, and frequency content corresponding to tower+1P cyclic pitch, in the frequency signal. The controller may be configured to apply a second inverse rotation operation to the second filtered signal to obtain the second pair of mutually orthogonal signals.

The controller may be configured to phase shift the second pair of mutually orthogonal control signals about a second phase angle prior to the inverse m-blade coordinate transformation being applied. Optionally, the controller may be configured to apply a second amplitude-limiting factor to the second pair of mutually orthogonal phase-shifted control signals prior to the inverse m-blade coordinate transformation being applied.

Optionally, application of the control action may be performed using an integral controller. For instance, this may be a proportional-integral controller.

According to another aspect of the invention there is provided a wind turbine comprising a controller as defined above. The wind turbine may be an off-shore wind turbine in which the tower is coupled to a floating platform. The tower natural frequency may be a coupled mode frequency between the tower and the floating platform.

According to another aspect of the invention there is provided a method for controlling a wind turbine having three rotor blades. The method comprises receiving a sensor signal indicative of acceleration of a tower of the wind turbine in a fore-aft direction of the wind turbine. The sensor signal is received from one or more sensors at a top of the tower or in a nacelle of the wind turbine. The method comprises determining a frequency signal in a fixed coordinate frame of the wind turbine that includes frequency content in the received sensor signal that is in a defined frequency region. The defined frequency region includes 3P frequency content and tower natural frequency content. The method comprises generating, based on the frequency signal, a pair of mutually orthogonal signals in the fixed coordinate frame. Generating the pair of mutually orthogonal signals includes filtering to retain frequency content corresponding to 2P cyclic pitch, and frequency content corresponding to tower-1P cyclic pitch, in the frequency signal. The frequency content corresponding to tower-1P cyclic pitch has a frequency of the tower natural frequency minus 1P. The method comprises applying a control action to the pair of mutually orthogonal signals to obtain a pair of mutually orthogonal control signals for mitigating target frequency content in the tower, e.g. 3P frequency content. The method comprises applying an inverse m-blade coordinate transformation to the pair of mutually orthogonal control signals to obtain individual pitch reference offset values for the respective rotor blades in a rotor coordinate frame of the wind turbine. The method comprises adjusting pitch of the rotor blades based on the obtained individual pitch reference offset values.

According to another aspect, which is not claimed, there is provided a non-transitory, computer-readable storage medium storing instructions thereon that when executed by one or more processors cause the one or more processors to perform the method described above.

### BRIEF DESCRIPTION OF THE DRAWINGS

Examples of the invention will now be described with reference to the accompanying drawings, in which:
Figure 1 schematically illustrates a wind turbine in accordance with an aspect of the invention;
Figure 2 schematically illustrates a controller of the wind turbine of Figure 1 in accordance with an aspect of the invention;
Figure 3 shows control modules implemented by the controller of Figure 2 in accordance with an example of the invention;
Figure 4 shows sub-modules of one of the control modules of Figure 3 in an example of the invention;
Figure 5 shows the steps of a method performed by the controller of Figure 2 in accordance with an aspect of the invention; and,
Figures 6(a)-6(d) show simulation results obtained by implementing the method of Figure 5, compared against simulation results obtained by implementing a previous method.

### DETAILED DESCRIPTION

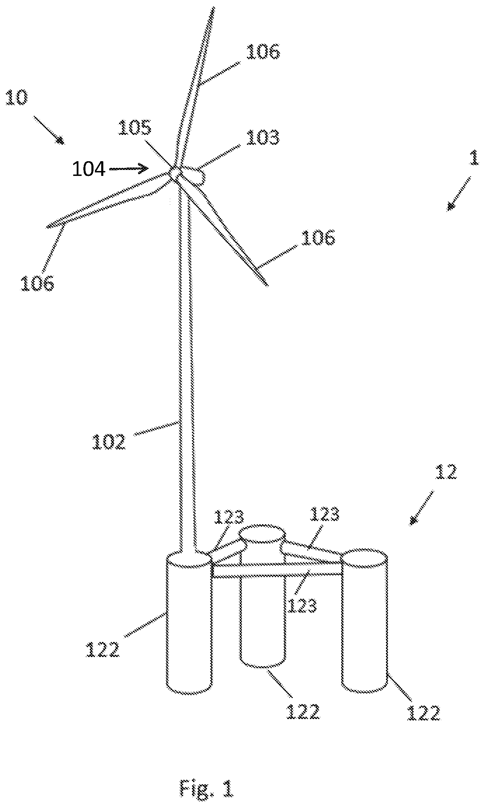

Figure 1 illustrates, in a schematic view, an example of a wind turbine 10. The wind turbine 10 includes a tower 102, a nacelle 103 situated atop the tower 102, and a rotor 104 operatively coupled to a generator housed inside the nacelle 103. The nacelle 103 houses components required for converting the energy captured from the wind into electrical energy and various components needed to operate, control and optimise the performance of the wind turbine 10. The rotor 104 of the wind turbine 10 includes a central hub 105 and three rotor blades 106 that project radially from the central hub 105.

The wind turbine 10 includes one or more acceleration sensors in the form of accelerometers located in/on the nacelle 103, and/or in/on the tower 102, e.g. at a top of the tower 102. The one or more accelerometers are configured to measure acceleration of the tower 102 in a fore-aft direction of the wind turbine 10, and also in a side-side (lateral) direction of the wind turbine 10 in at least some examples.

The wind turbine 10 comprises a control system including one or more controllers (not shown in Figure 1). The controller(s) may be placed inside the nacelle 103, in the tower 102, or distributed throughout the inside (or outside) of the wind turbine 10 and communicatively connected to one another.

The rotors 106 are pitch adjustable and can be adjusted with respect to a collective pitch setting, where the blades are set to an equal pitch value. The rotor blades 106 are also adjustable in accordance with individual pitch settings, where each of the blades 106 may be supplied with an individual pitch setpoint.

In the described example, the wind turbine 10 is part of a floating wind turbine system 1. The system 1 may be (a part of) an off-shore wind turbine installation, i.e. an installation located away from land in the sea or ocean. In addition to the wind turbine 10, the floating system 1 includes a floating platform 12. The floating platform 12 may be attached to the ground, e.g. the seabed, in any suitable manner. In particular, there are various different types of floating platform designs or concepts, including so-called tripod, tension-leg platform (TLP), semi-submersible and spar platforms. Figure 1 illustrates an example in which the floating platform is of semi-submersible type, having three pillars 122 (partially submerged in water), three connecting beams 123 for maintaining the connection between the pillars 122, and the tethers for mooring. It will be understood that different numbers of pillars and/or tethers may be used, and that different types of floating platforms 12 may be used. The wind turbine tower 102 is coupled to the platform 12. In some examples, more than one tower 102 may be coupled to the platform 12, such as two or more towers.

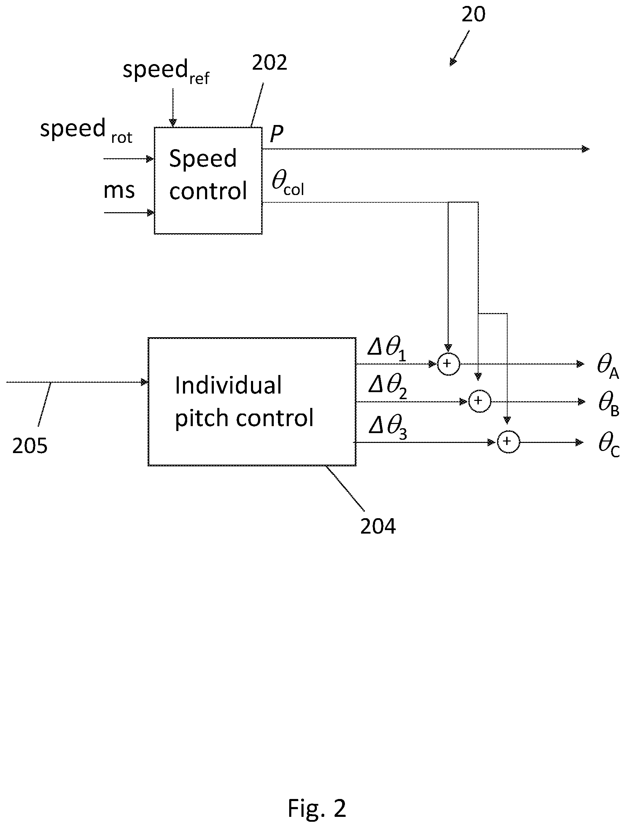

Figure 2 schematically illustrates an example of a control system or overall controller 20 of the wind turbine 10 that includes a (feedback) speed controller or control block 202 implemented to determine collective pitch actuation signals for controlling pitch of the rotor blades 106. In the illustrated implementation, the speed controller 202 minimises a speed error (speedᵣₒₜ - speed_{ref}) between the actual rotor speed (speedᵣₒₜ) and a reference rotor speed (speed_{ref}) in order to output a requested power P (in the form of a power setpoint) and a collective pitch reference, *θ*_{col}. The collective pitch reference as determined by the speed controller 202, in view of the rotor speed, may also take further sensor values into account. This is referred to in Figure 2 as a measurement set, ms, being input into the speed controller 202. The feedback speed controller 202 may be implemented by a PI (proportional-integral), PID (proportional-integral-derivative), or similar control scheme. In one example, the speed controller 202 may alternatively be a model predictive controller which, based on minimising a cost function, is arranged to determine the collective pitch reference and/or the power reference.

Figure 2 further illustrates a control block/module or controller 204, of the overall controller 20. In the controller 204, pitch modification signals or pitch reference offset values (Δθ₁, Δθ₂, Δθ₃) are determined based on one or more input signals 205. In the described example, the input signals 205 include measured tower acceleration signals from the one or more accelerometers, specifically measurements of tower acceleration in the fore-aft and/or side-side directions of the wind turbine 10. The pitch reference offset values (Δθ₁, Δθ₂, Δθ₃) are superimposed onto the collective pitch reference *θ*_{col} to provide resulting or overall pitch modification signals (θ_{A}, θ_{B}, θ_{C}) that can be applied to pitch actuators of the rotor blades 106 individually.

The present invention is directed to reducing levels of fatigue in the wind turbine tower 102. In particular, the invention is directed to reducing tower fatigue that arises as a result of relatively high frequency content in the tower movement. Specifically, the invention is aimed at reducing tower fatigue resulting from excitations/oscillations that occur when 3P frequency content in the wind turbine tower coincides with, or is in relatively close proximity to, the coupled mode frequency content in the wind turbine tower arising as a result of the coupling between the tower and floating platform of a floating platform wind turbine system, e.g. off-shore system. The coupled mode frequency is a natural mode frequency of the floating system. The 3P and coupled mode frequencies may be in relatively close proximity when the rotor is close to the nominal rotor speed, meaning that the wind turbine may be close to, or at, resonance, for significant periods of time during wind turbine operation. The invention can also be used to reduce tower fatigue resulting from excitations that occur when the 3P frequency coincides with, or is in relatively close proximity to, a natural mode ('tower first mode') of the tower of an onshore wind turbine.

Here, 1P is the rotational frequency of the rotor 104, and 3P is three times the rotor rotational frequency. For a wind turbine with three rotor blades - such as in the described example - 3P is also the 'blade passing frequency', i.e. the frequency with which one of the rotor blades 106 passes the wind turbine tower 102 when the rotor 104 is rotating. In general, nP is n times the rotor rotational frequency, where n is whole number.

The present invention advantageously disrupts 3P frequency content in oscillations of the wind turbine tower - in particular, when the 3P content is near to the coupled mode frequency content - in order to mitigate the relatively large oscillations, or resonance, that occurs when these two frequencies coincide.

It is recognised that 3P frequency content in a wind turbine tower can be influenced by adjusting the pitch of the wind turbine rotor blades, either via collective pitch control with a pitching frequency of 3P, or via individual/cyclic pitch control with a pitching frequency of 2P or 4P. It is also recognised that such blade pitching schemes may be based on rotor blade loading/movement measurements or tower (top) loading/movement measurements.

A previous approach/scheme provides collective blade pitch control at 3P based on blade flap load measurements or fore-aft tower acceleration measurements. While this approach may work for certain wind turbine configurations, it necessarily assumes certain mode shapes that are not accurate for floating platform wind turbine systems, meaning that the pitching scheme is not as effective at targeting the frequency content of interest for such systems.

Another previous approach/scheme provides individual pitch control at 2P based on blade flap load measurements. However, this is an indirect approach as the pitching scheme targets all events/actions in the tilt and yaw directions of the wind turbine, meaning that the pitching scheme does not just target the events/actions that lead to tower fatigue in the manner described above. Indeed, this approach may be regarded as being relatively inefficient as a relatively large amount of blade pitch control according to this scheme may be needed in order to reduce tower fatigue by any significant amount.

In the present invention, a control system and method is provided in which individual pitch control at 2P, and optionally 4P, is performed based on tower acceleration/movement measurements. The approach of the present invention is relatively effective and efficient because it does not suffer from the drawbacks of the approaches outlined above.

For the frequency region of interest, i.e. frequency content close to 3P, the acceleration of the top of a wind turbine tower in the fore-aft direction shows a relatively strong peak. However, the tower top acceleration in the side-side direction also shows a peak close to 3P, albeit less pronounced than in the fore-aft direction. Also, the phase of the side-side tower acceleration may be uncorrelated with the phase of the fore-aft tower acceleration.

The present invention beneficially targets fore-aft tower acceleration as this may be regarded as the main component to target for reducing tower fatigue. However, examples of the invention may additionally target side-side tower acceleration in certain situations. For instance, for relatively large rotor systems, the edge frequency of the rotor blades is close to, or coincides with, 4P. This means that backward whirling frequency - which is equal to the edge frequency minus 1P - is local to 3P, and backward whirling content will appear in the side-side tower acceleration.

Furthermore, as a result of the wind turbine nacelle tilt-yaw dynamics being imbalanced, 2P cyclic pitching that influences 3P content of the tower in the fore-aft direction can also influence edge whirling through excitation of the backward whirling edge signal. Therefore, examples of the present invention control tower fatigue in a manner that takes edge whirling phenomena into account.

The present invention is advantageous in its implementation of targeting tower fatigue via individual blade pitch control based on tower top measurements. In particular, it is recognised that frequency content local to 3P in a tower top acceleration signal in a fixed reference frame of the wind turbine will include frequency content corresponding to cyclic pitching at both 2P and 4P in a rotor rotational frame of the wind turbine. In order to perform individual pitch control at 2P, or to perform individual pitch control separately at 2P and 4P, the 2P and 4P cyclic content close to 3P in the received tower top acceleration signal need to be isolated from one another. However, as these two frequencies are relatively close together then filtering the obtained signal to isolate the 2P or the 4P frequency, e.g. via notch filtering, is challenging. The present invention is beneficial in that it provides an approach for effectively splitting apart the 2P and 4P cyclic content close to 3P in a received tower top acceleration signal so that the 2P, and optionally, 4P content can be targeted effectively by the pitching scheme, thereby improving the reduction of tower fatigue. This will be discussed in greater detail below.

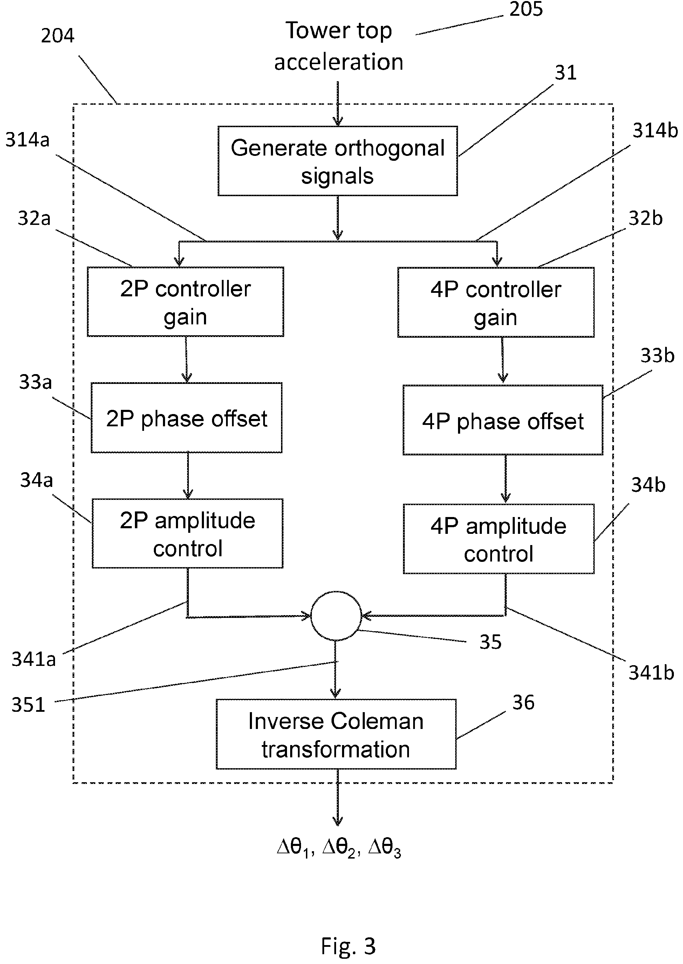

Figure 3 schematically illustrates a signal processing strategy to be implemented by the controller 204 in accordance with examples of the invention, the signal processing strategy comprising the implementation of a number of control blocks/modules of the controller 204 as described herein.

In the illustrated example, the controller 204 receives measurements of the tower top acceleration, from one or more accelerometers of the wind turbine 10, in both the fore-aft and the side-side directions. However, it will be understood that the described approach is applicable when the received tower top acceleration measurement is in the fore-aft direction only.

Also, in the illustrated example the controller 204 is configured to determine individual pitch offsets for pitching at both 2P and 4P in order to mitigate against tower fatigue. However, it will be understood that the described approach is also applicable for pitching at 2P only. Indeed, pitching only at the lower frequency of 2P may have benefits such as a reduced likelihood of reaching a capacity of a hydraulic pump system used for implementing blade pitch, and reduced wear on blade bearings, compared with when higher-frequency pitching (at 3P, 4P, etc.) is performed.

Referring to Figure 3, the controller 204 is configured to receive the tower top acceleration signal 205 from the one or more accelerometers. At control block 31, the controller 204 is configured to generate a pair of mutually orthogonal signals in a fixed reference/coordinate frame of the wind turbine 10 based on the input signal 205. This assists with splitting the 2P content and the 4P content in the input signal 205, as described in greater detail below. Note that, even in an example - such as the present example - in which pitching at both 2P and 4P is to be implemented, it is still desired to split apart the 2P and 4P content as for most effective mitigation of tower fatigue, different control actions are beneficially applied to the content at different frequencies. The generation of mutually orthogonal signals also allows for transformation of the signals from the fixed frame to a rotor rotational reference/coordinate frame of the wind turbine 10 in which the determined individual pitch offsets are to be applied, as will be discussed below.

In relation to control block 31, it is noted that it is possible to express a signal with a non-zero component in a single direction as follows: $\left|{A}_{yK}\right| \left[\begin{matrix}cos \left({ω}_{i}t\right) \\ 0\end{matrix}\right] = \frac{\left|{A}_{yK}\right|}{2} \left(\left[\begin{matrix}cos \left({ω}_{i}t\right) \\ sin \left({ω}_{i}t\right)\end{matrix}\right]+\left[\begin{matrix}cos \left({ω}_{i}t\right) \\ - sin \left({ω}_{i}t\right)\end{matrix}\right]\right)$

Here, the signal |A_{yK}|cos(*ωᵢt*) may be a received tower top acceleration signal in the fore-aft direction of the wind turbine 10, where |A_{yK}| is the magnitude of the amplitude of the signal, *ωᵢ* is the frequency, and *t* is time. It is seen that the expression on the right-hand side is a linear sum of two vectors/signals, each of which comprise a pair of mutually orthogonal components.

By extension, for a received input signal that includes a pair of mutually orthogonal signals in the fixed frame - e.g. tower top acceleration measurements in the fore-aft and side-side directions - the signal may be expressed as follows: $\begin{matrix}\left[\begin{matrix}\left|{A}_{yK}\right| cos \left({ω}_{i}t+{δ}_{y}\right) \\ \left|{A}_{xK}\right| sin \left({ω}_{i}t+{δ}_{x}\right)\end{matrix}\right] \\ = \frac{\left|{A}_{yK}\right|}{2} \left(\left[\begin{matrix}cos \left({ω}_{i}t+{δ}_{y}\right) \\ sin \left({ω}_{i}t+{δ}_{y}\right)\end{matrix}\right]+\left[\begin{matrix}cos \left({ω}_{i}t+{δ}_{y}\right) \\ - sin \left({ω}_{i}t+{δ}_{y}\right)\end{matrix}\right]\right) \\ + \frac{\left|{A}_{xK}\right|}{2} \left(\left[\begin{matrix}cos \left({ω}_{i}t+{δ}_{x}\right) \\ sin \left({ω}_{i}t+{δ}_{x}\right)\end{matrix}\right]-\left[\begin{matrix}cos \left({ω}_{i}t+{δ}_{x}\right) \\ - sin \left({ω}_{i}t+{δ}_{x}\right)\end{matrix}\right]\right)\end{matrix}$

Here, |A_{yK}| may be the amplitude in the fore-aft direction and |*A_{xK}*| may be the amplitude in the side-side direction, with *δ_{y}* and *δₓ* being disturbances in the fore-aft and side-side directions, respectively, i.e. to account for the fact that the orthogonal terms are not balanced.

The parts/terms of the above expression with [cos(*ωᵢt*) sin(*ωᵢt*)]*^{T}* correspond to a fixed frame vector associated with cyclic pitching at *ωᵢ* -1P, while the parts of the above expression with [cos(*ωᵢt*) - sin(*ωᵢt*)]*^{T}* correspond to a fixed frame vector associated with cyclic pitching at *ωᵢ* +1P. The frequency *ωᵢ* may be set to be a target frequency. As discussed above, in the present invention it is desired to disrupt/change the tower movement such that 3P frequency content does not combine with a tower natural mode frequency, i.e. the coupled mode frequency (for off-shore systems) or the tower first mode (for onshore systems), to cause large oscillations / resonance. In particular, it is desired to disrupt/change the tower movement so that 3P is not so close to, or does not coincide with, the natural mode frequency. This can be achieved by disrupting the 3P and/or natural mode frequency content. As such, the target frequency *ωᵢ* may be set to 3P or the tower natural mode frequency. For instance, it is noted that, when *ωᵢ* =3P, cyclic pitching at 3P-1P=2P and 3P+1P=4P is obtained.

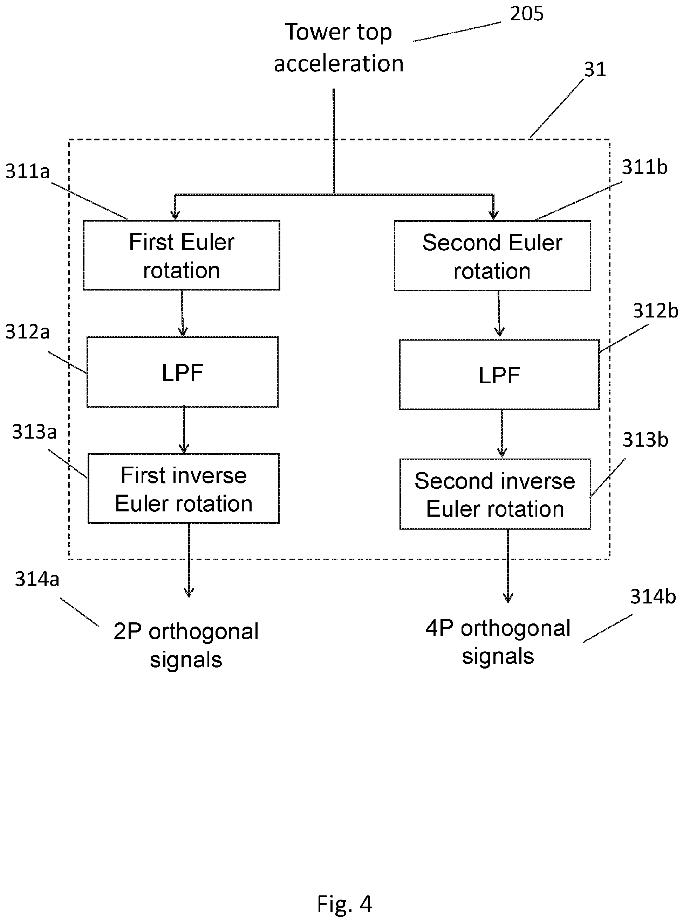

Figure 4 shows sub-blocks of the control block 31 in Figure 3, where the sub-blocks generate a first pair of mutually orthogonal signals in the fixed frame that correspond to pitching at 2P in the rotational frame, and a second pair of mutually orthogonal signals in the fixed frame that correspond to pitching at 4P in the rotational frame. In particular, the sub-blocks process the input signal in a manner that increases the distance between the content corresponding to 2P and the content corresponding to 4P so that the 2P and 4P content can be effectively isolated (from one another) in the input signal.

In a first branch of the sub-blocks of control block 31, frequency content in the tower top acceleration signal 205 corresponding to 2P cyclic content is isolated. At sub-block 311a, a rotation operation in the form of an Euler operation is applied to the input signal 205. In particular, the Euler operation is of the form $\left[\begin{matrix}cos \left({ω}_{c}t\right) & sin \left({ω}_{c}t\right) \\ - sin \left({ω}_{c}t\right) & cos \left({ω}_{c}t\right)\end{matrix}\right]$ where ω_{c}t is the rotation angle of the rotation operation, and ω_{c} is a frequency associated with the rotation. The rotation is in a first rotation direction, e.g. a clockwise rotation in the fixed frame. The frequency ω_{c} is set to a value that provides sufficient separation between the frequency content corresponding to 2P and 4P, to allow effective filtering of one of these frequencies in the following step. In the described example, ω_{c} is set to 3P, which means that 2P cyclic content in the input signal 205 becomes 0P content in the rotated signal, and 4P cyclic content in the input signal 205 becomes 6P content in the rotated signal. Other examples of suitable values for ω_{c} may include the tower first mode frequency or the couple mode frequency.

At sub-block 312a, a low pass filter is applied to retain the 0P frequency content and remove the 6P frequency content. In particular, the separation of these two frequencies is relatively large (i.e.6P-0P=6P) and so the low pass filter can readily be set such that it does not distort the low frequency content (around 0P) but attenuates the high frequency content (around 6P). In other examples, a different type of filter, e.g. notch filter, may be used for this purpose. At sub-block 313a, a rotation operation in the form of an Euler rotation is applied to the filtered signal obtained at sub-block 312a to return the signal to the original fixed frame. That is, the rotation operation applied at sub-block 313a is the inverse operation that is applied at sub-block 311a, namely: $\left[\begin{matrix}cos \left({ω}_{c}t\right) & - sin \left({ω}_{c}t\right) \\ sin \left({ω}_{c}t\right) & cos \left({ω}_{c}t\right)\end{matrix}\right]$

The obtained signal 314a from the first branch is a pair of mutually orthogonal signals/components that correspond to 2P cyclic content in the received tower top acceleration signal 205.

In a second branch of the sub-blocks of control block 31, frequency content in the tower top acceleration signal 205 corresponding to 4P cyclic content is isolated. A corresponding set of sub-blocks 311b, 312b, 313b is applied to the input signal 205. However, relative to sub-block 311a, at sub-block 311b an Euler rotation in an opposite direction, e.g. anticlockwise direction. The rotation operation may therefore be regarded as the same as the inverse operation applied at sub-block 313a. As the rotation is in the opposite direction in the second branch, then application of a low pass filter 312b in this case retains the 4P cyclic content in the input signal 205 and removes the 2P cyclic content. The inverse rotation operation at sub-block 313b may then be the same operation as the rotation operation applied at sub-block 311a in the first branch. The obtained signal 314b from the second branch is a pair of mutually orthogonal signals/components that correspond to 4P cyclic content in the received tower top acceleration signal 205.

It is noted that when 3P is close to the tower natural frequency the part of the tower acceleration signal 205 processed by the control block 31 (to generate mutually orthogonal signals) may include tower natural frequency content as well as 3P frequency content. The pairs of mutually orthogonal signals 314a, 314b output from the control block 31 may therefore include content arising from the tower natural frequency content in the input signal 205. For instance, in the first branch of sub-blocks, if a rotation operation with a rotation angle of 3P is applied, then the tower natural frequency content in the input signal 205 will appear at tower-3P and tower+3P. The LPF 312a may then filter out the tower+3P content while retaining the tower-3P content. After applying the inverse rotation operation 313a, the obtained orthogonal signals 314a may then comprise content corresponding to cyclic pitching at tower-1P (as well as at 2P). In a corresponding manner, the orthogonal signals 314b obtained from the second branch of control blocks 311b, 312b, 313b may comprise content corresponding to cyclic pitching at tower+1P (as well as at 4P).

Referring back to Figure 3, the 2P orthogonal signal 314a is input into a first branch of the control blocks of the controller 204. At block 32a, an integral controller such as a proportional integral (PI) controller is applied to the signal 314a. That is, a controller gain for mitigating tower fatigue at 2P is applied to the signal 314a. At block 33a, a phase offset operation is then applied to the signal obtained from the PI controller block 32a to mitigate tower fatigue at 2P. As the optimal phase of the 2P cyclic pitch signal may be a function of wind turbine operating point, then the block 33a may be regarded as applying dynamic phase compensation to the signal. In particular, the block 33a may apply an operation of the form $\left[\begin{matrix}cos {δ}_{a} & sin {δ}_{a} \\ - sin {δ}_{a} & cos {δ}_{a}\end{matrix}\right]$ where δₐ = *ωᵢ*-*ωᵣₒₜ* is the determined phase difference between the pitching of the blades 106 and *ωᵣₒₜ* is equal to 1P.

At control block 34a, an amplitude-limiting factor is applied to the signal obtained from block 33a to limit an amplitude at which pitching at 2P occurs. The amplitude-limiting factor may be determined or set based on one or more parameters, such as pump capacity of a hydraulic pitch system of the wind turbine 10 for adjusting pitch of the rotor blades 10, or on wear of the blade or pitch bearings. A signal 314a in the fixed frame is obtained from the block 34a.

The 4P orthogonal signal 314b obtained from the control block 31 is input into a second branch of the control blocks of the controller 204. The second branch comprises a set of control blocks 32b, 33b, 34b that correspond to blocks 32a, 33a, 34a in the first branch. However, a different controller gain, phase offset and/or amplitude-limiting factor may be applied as this signal relates to mitigating tower fatigue at 4P (rather than 2P). In particular, the block 33b may apply an operation of the form $\left[\begin{matrix}cos {δ}_{b} & sin {δ}_{b} \\ - sin {δ}_{b} & cos {δ}_{b}\end{matrix}\right]$ where δ_{b} = *ωᵢ*+*ωᵣₒₜ.* A signal 314b in the fixed frame is obtained from the amplitude-limiting factor block 34b.

At control block 35, the signals 341a, 341b obtained from the first and second branches are combined at the combining block 35, e.g. by summation, to obtain the combined signal 351. At control block 36, an inverse m-blade (multi-blade) transformation in the form of a Coleman transformation is applied to the combined signal 351 to transform the combined signal 351 in the fixed frame to a signal in the rotor rotational frame, namely, the individual pitch reference offset values Δθ₁₂₃, to be applied to the respective rotor blades 106. Indeed, an inverse Colman transformation is a matrix transformation that transforms a vectors in a non-rotating fixed reference frame into a rotating reference frame. The offset values Δθ₁₂₃ are applied to the collective pitch reference obtained from the speed controller 202 before being used to control individual blade pitch of the wind turbine 10, as described above with reference to Figure 2.

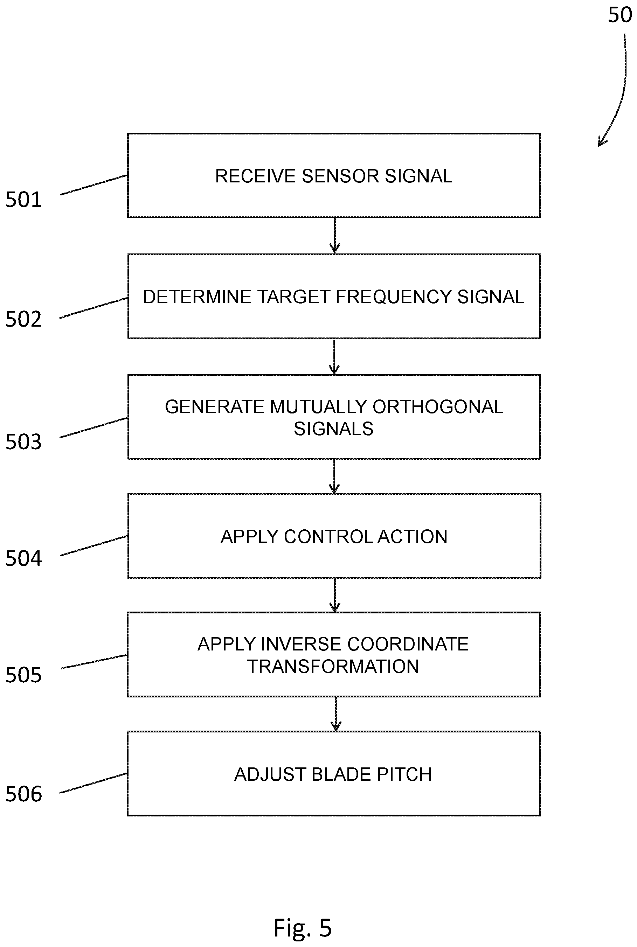

Figure 5 summarises the steps of a method 50 performed by the controller 204 in accordance with examples of the invention. The method 50 is for controlling individual pitch of the rotor blades 106 based on acceleration measurements of the wind turbine tower 102 in order to mitigate against or reduce fatigue in the tower 102.

At step 501, the method 50 involves receiving a sensor signal 205 indicative of acceleration of the tower 102 of the wind turbine 10 in a fore-aft direction of the wind turbine 10. The sensor signal 205 is received from one or more sensors, e.g. accelerometers, at a top of the tower 102 or in the nacelle 103 of the wind turbine 10. In some examples, the sensor signal 205 includes oscillations in the fore-aft direction only. A pitching scheme based on such a signal may be beneficial for providing optimal control of fore-aft oscillations. In some other examples, the sensor signal 205 is also indicative of acceleration of the tower 102 in a side-side direction of the wind turbine 10. A pitching scheme based on such a signal may be beneficial in that edge whirling motion is also taken into account in the output of the pitching scheme, e.g. damping of whirling motion may be included in the control output.

At step 502, the method 50 involves determine a frequency signal in a fixed coordinate frame of the wind turbine 10 that includes frequency content in the received sensor signal that is in a defined frequency region. The present method is for mitigating against large tower oscillations caused by 3P content in the tower 102 coinciding with, or being close to, natural frequency content in the tower 102, e.g. coupled mode content or tower first mode content. The defined frequency region therefore includes 3P frequency content and tower natural frequency content.

At step 503, the method 50 involves generating a pair of mutually orthogonal signals in the fixed coordinate frame based on the frequency signal. This involves filtering to retain frequency content corresponding to 2P cyclic frequency content. This also involves filtering to retain frequency content corresponding to the tower natural frequency minus 1P ('tower-1P). As described above, 3P content in the fixed frame (at least partly) appears at 2P in the rotational frame. In a similar manner, natural frequency content in the fixed frame (at least partly) appears at the tower-1P frequency in the rotational frame.

In some examples, the pitching scheme includes only relatively low-frequency pitching (to disrupt 3P), i.e. at 2P. Such a pitching scheme may be beneficial in that it causes less wear of the blade or pitch bearings, and is less likely to be affected by constraints associated with the capacity of a hydraulic pump system used to for pitching the blades. In other examples, the pitching scheme also includes relatively high-frequency pitching (to disrupt 3P), i.e. at 4P. Such a pitching scheme may be beneficial in that it provides more complete targeting of frequency content in the input signal that can lead to large tower oscillations.

Generating the pair of mutually orthogonal signals may comprises increasing a distance separation between different parts of the input signal so that more effective filtering of the desired part of the content can be performed. In particular, this may be performed in the manner described above with reference to Figure 4 to separate the 2P and tower-1P content from the 4P and tower+1P content.

At step 504, the method 50 involves applying a control action to the pair of mutually orthogonal signals to obtain a pair of mutually orthogonal control signals for mitigating target frequency content, e.g. 3P, in the tower 102. In particular, this may involve application of one or both of a controller gain and a (dynamic) phase offset. The method 50 may additionally involve applying an amplitude-limiting factor to the signal.

At step 505, the method 50 involves applying an inverse m-blade coordinate transformation to the pair of mutually orthogonal control signals to obtain individual pitch reference offset values for the respective rotor blades 106 in a rotor coordinate frame of the wind turbine 10. At step 506, the method 50 involves transmitting a control signal to adjust pitch of the rotor blades based on the obtained individual pitch reference offset values.

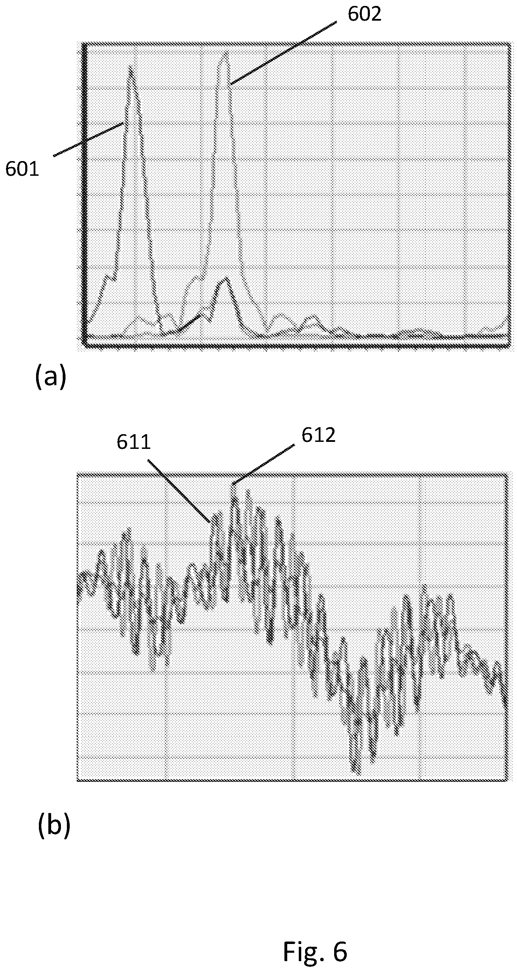

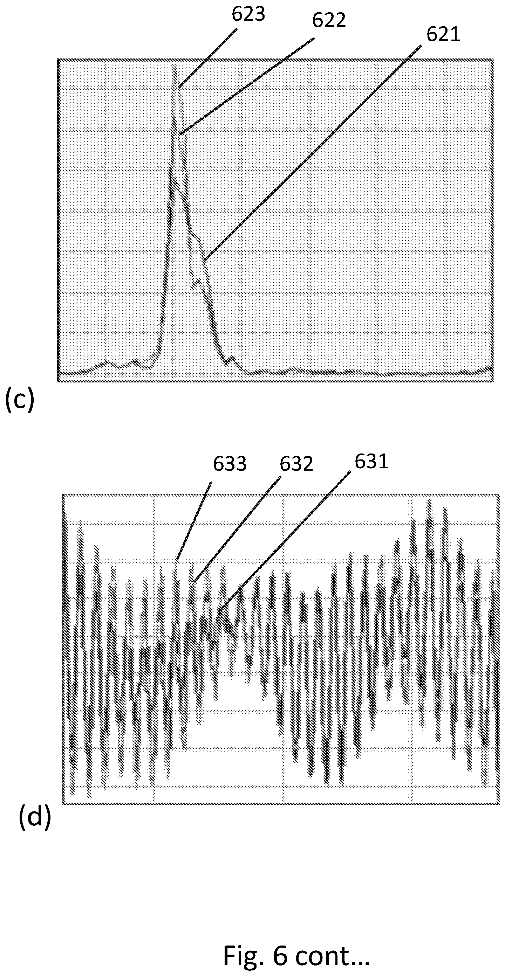

Figure 6 shows the results of a simulation implementing the presently-disclosed method compared against simulation results of a previous approach. The present approach includes individual blade pitching at 2P. The previous approach includes collective rotor blade pitching at 3P. Figure 6(a) shows plots of rotor blade pitch angle against pitching frequency. A plot 601 of the blade pitch for the present 2P pitching method shows that the pitching frequency for the presently-disclosed pitching scheme is lower than for the collective 3P method, which is shown as the plot 602. Figure 6(b) shows plots of rotor blade pitch angle against time. It may be seen that the blade pitch angle 611 for the present 2P method has a lower amplitude that the pitch angle 612 for the previous collective 3P method. Figure 6(c) shows plots of loading experienced by the wind turbine tower against pitching frequency. The experienced load 621 for the present 2P method is lower than the load 622 for the collective 3P method, which in turn is lower than the load 623 in a baseline case in which blade pitching to mitigate against tower fatigue is not performed. Figure 6(d) shows plots of loading experienced by the wind turbine tower against time. An amplitude of the loading 631 is smallest for the present 2P method, followed by an amplitude of the loading 632 for the previous collective 3P method, with an amplitude of the loading 633 being greatest in the baseline case.

Many modifications may be made to the described examples without departing from the scope of the appended claims.

The described control system / controller 20 may be in the form of any suitable computing device, for instance one or more functional units or modules implemented on one or more computer processors. Such functional units may be provided by suitable software running on any suitable computing substrate using conventional or custom processors and memory. The one or more functional units may use a common computing substrate (for example, they may run on the same server) or separate substrates, or one or both may themselves be distributed between multiple computing devices. A computer memory may store instructions for performing the methods performed by the controller, and the processor(s) may execute the stored instructions to perform the method.

## Claims

1. A controller (20) for a wind turbine (10) having three rotor blades (106), the controller being for adjusting individual pitch of the three rotor blades, the controller being configured to:
receive (501) a sensor signal indicative of acceleration of a tower (102) of the wind turbine in a fore-aft direction of the wind turbine, wherein the sensor signal is received from one or more sensors at a top of the tower (102) or in a nacelle (104) of the wind turbine;
determine (502) a frequency signal in a fixed coordinate frame of the wind turbine that includes frequency content in the received sensor signal that is in a defined frequency region, **characterized in that** the defined frequency region includes 3P frequency content and tower natural frequency content; and **characterized in that** the controller is further configured to:
generate (503), based on the frequency signal, a pair of mutually orthogonal signals in the fixed coordinate frame, wherein generating the pair of mutually orthogonal signals comprises filtering to retain frequency content corresponding to 2P cyclic pitch, and frequency content corresponding to tower-1P cyclic pitch, in the frequency signal, wherein the frequency content corresponding to tower-1P cyclic pitch has a frequency of the tower natural frequency minus 1P;
apply (504) a control action to the pair of mutually orthogonal signals to obtain a pair of mutually orthogonal control signals for mitigating target frequency content in the tower;
apply (505) an inverse m-blade coordinate transformation to the pair of mutually orthogonal control signals to obtain individual pitch reference offset values for the respective rotor blades in a rotor coordinate frame of the wind turbine; and,
transmit a control signal to adjust (506) pitch of the rotor blades based on the obtained individual pitch reference offset values.

2. A controller according to Claim 1, wherein the received sensor signal is indicative of acceleration of the tower in a side-side direction of the wind turbine.

3. A controller according to Claim 1 or Claim 2, the controller being configured to phase shift the pair of mutually orthogonal control signals about a phase angle prior to the inverse m-blade coordinate transformation being applied.

4. A controller according to Claim 3, wherein the controller is configured such that the phase angle is defined based on an operating condition of the wind turbine; optionally, wherein the operating condition is a function of one or more of: pitch angle of the rotor blades; the speed of rotation of the rotor; wind speed in the vicinity of the wind turbine; and, if the wind turbine is an off-shore wind turbine, a misalignment between wind direction and wave direction in the vicinity of the wind turbine.

5. A controller according to Claim 3 or Claim 4, the controller being configured to apply an amplitude-limiting factor to the pair of mutually orthogonal phase-shifted control signals prior to the inverse m-blade coordinate transformation being applied.

6. A controller according to Claim 5, wherein the controller is configured to determine the amplitude-limiting factor based on a pump capacity of a hydraulic pitch system of the wind turbine for adjusting pitch of the rotor blades.

7. A controller according to any previous claim, wherein to generate the pair of mutually orthogonal signals the controller is configured to:
apply a rotation operation to the frequency signal to obtain a rotated signal;
apply a low pass filter to the rotated signal to retain frequency content corresponding to 2P cyclic pitch and frequency content corresponding to tower-1P cyclic pitch in the frequency signal;
apply an inverse rotation operation to the filtered signal to obtain the pair of mutually orthogonal signals.

8. A controller according to Claim 7, wherein a frequency of a rotation angle used in the rotation operation is one of: 3P; the tower natural frequency; and, a coupled mode frequency between the tower and a floating platform to which the tower is coupled.

9. A controller according to Claim 8, wherein the rotation angle is 3P, wherein the rotated signal comprises 0P frequency content, 6P frequency content, frequency content corresponding to tower-3P cyclic pitch and frequency content corresponding to tower+3P cyclic pitch, and wherein the low pass filter is applied to remove the 6P frequency content and the frequency content corresponding to tower+3P cyclic pitch to obtain the filtered signal.

10. A controller according to any previous claim, the controller being configured to:
generate, based on the frequency signal, a second pair of mutually orthogonal signals in the fixed coordinate frame, wherein generating the second pair of mutually orthogonal signals includes filtering to retain frequency content corresponding to 4P cyclic pitch, and frequency content corresponding to tower+1P cyclic pitch, in the frequency signal, wherein the frequency content corresponding to tower+1P cyclic pitch has a frequency of the tower natural frequency plus 1P;
apply a second control action to the second pair of mutually orthogonal signals to obtain a second pair of mutually orthogonal control signals for mitigating target frequency content in the tower;
combine the second pair of mutually orthogonal control signals with the pair of mutually orthogonal control signals to obtain a combined pair of mutually orthogonal control signals,
wherein the inverse m-blade coordinate transformation is applied to the combined pair of mutually orthogonal control signals to obtain the individual pitch reference offset values.

11. A controller according to Claim 10 when dependent on Claim 7, wherein to generate the second pair of mutually orthogonal signals, the controller is configured to:
apply a second rotation operation to the frequency signal to obtain a second rotated signal, wherein the second rotation operation is in an opposite direction to the rotation operation;
apply a second low pass filter to the second rotated signal to retain frequency content corresponding to 4P cyclic pitch and tower+1P cyclic pitch in the frequency signal; and,
apply a second inverse rotation operation to the second filtered signal to obtain the second pair of mutually orthogonal signals.

12. A controller according to Claim 10 or Claim 11, the controller being configured to phase shift the second pair of mutually orthogonal control signals about a second phase angle prior to the inverse m-blade coordinate transformation being applied; optionally, wherein the controller is configured to apply a second amplitude-limiting factor to the second pair of mutually orthogonal phase-shifted control signals prior to the inverse m-blade coordinate transformation being applied.

13. A controller according to any previous claim, wherein the controller is configured to apply the control action using an integral controller; optionally, a proportional-integral controller.

14. A wind turbine (10) comprising a controller (20) according to any previous claim; optionally, wherein the wind turbine is an off-shore wind turbine in which the tower is coupled to a floating platform (12), and wherein the tower natural frequency is a coupled mode frequency between the tower (102) and the floating platform (12).

15. A method (50) for controlling a wind turbine (10) having three rotor blades (106), the method comprising:
receiving (501) a sensor signal indicative of acceleration of a tower (102) of the wind turbine in a fore-aft direction of the wind turbine, wherein the sensor signal is received from one or more sensors at a top of the tower (102) or in a nacelle (104) of the wind turbine;
determining (502) a frequency signal in a fixed coordinate frame of the wind turbine that includes frequency content in the received sensor signal that is in a defined frequency region, **characterized in that** the defined frequency region includes 3P frequency content and tower natural frequency content; and **characterized in that** the method further comprising:
generating (503), based on the frequency signal, a pair of mutually orthogonal signals in the fixed coordinate frame, wherein generating the pair of mutually orthogonal signals includes filtering to retain frequency content corresponding to 2P cyclic pitch, and frequency content corresponding to tower-1P cyclic pitch, in the frequency signal, wherein the frequency content corresponding to tower-1P cyclic pitch has a frequency of the tower natural frequency minus 1P;
applying (504) a control action to the pair of mutually orthogonal signals to obtain a pair of mutually orthogonal control signals for mitigating target frequency content in the tower;
applying (505) an inverse m-blade coordinate transformation to the pair of mutually orthogonal control signals to obtain individual pitch reference offset values for the respective rotor blades in a rotor coordinate frame of the wind turbine; and,
adjusting (506) pitch of the rotor blades based on the obtained individual pitch reference offset values.

## Patentansprüche

1. Steuereinheit (20) für eine Windkraftanlage (10), die drei Rotorblätter (106) aufweist, wobei die Steuereinheit zum Einstellen eines einzelnen Blattwinkels der drei Rotorblätter dient, wobei die Steuereinheit konfiguriert ist zum:
Empfangen (501) eines Sensorsignals, das eine Beschleunigung eines Turms (102) der Windkraftanlage in einer Vorwärts-Rückwärtsrichtung der Windkraftanlage angibt, wobei das Sensorsignal von einem oder mehreren Sensoren an einer Oberseite des Turms (102) oder in einer Gondel (104) der Windkraftanlage empfangen wird;
Bestimmen (502) eines Frequenzsignals in einem festen Koordinatenrahmen der Windkraftanlage, der Frequenzanteile im empfangenen Sensorsignal beinhaltet, das in einem definierten Frequenzbereich liegt, **dadurch gekennzeichnet, dass** der definierte Frequenzbereich 3P-Frequenzanteile und Turm-Eigenfrequenzanteile beinhaltet; und **dadurch gekennzeichnet, dass** die Steuereinheit weiter konfiguriert ist zum:
Erzeugen (503), basierend auf dem Frequenzsignal, eines Paares zueinander orthogonaler Signale in dem festen Koordinatenrahmen, wobei Erzeugen des Paares zueinander orthogonaler Signale Filtern zum Beibehalten von Frequenzanteilen, die dem zyklischen 2P-Blattwinkel entsprechen, und Frequenzanteilen, die einem zyklischen Turm-1P-Blattwinkel entsprechen, in dem Frequenzsignal umfasst, wobei die Frequenzanteile, die dem zyklischen Turm-1P-Blattwinkel entsprechen, eine Frequenz aufweisen, die der Turm-Eigenfrequenz minus 1P entspricht;
Anwenden (504) einer Steuermaßnahme auf das Paar zueinander orthogonaler Signale, um ein Paar zueinander orthogonaler Steuersignale zum Mindern der Zielfrequenzanteile im Turm zu erhalten;
Anwenden (505) einer inversen m-Blatt-Koordinatentransformation auf das Paar zueinander orthogonaler Steuersignale, um individuelle Blattwinkel-Referenzversatzwerte für die jeweiligen Rotorblätter in einem Rotorkoordinatenrahmen der Windkraftanlage zu erhalten; und
Übertragen eines Steuersignals, um den Blattwinkel der Rotorblätter basierend auf dem erhaltenen individuellen Blattwinkel-Referenzversatzwert einzustellen (506).

2. Steuereinheit nach Anspruch 1, wobei das empfangene Sensorsignal eine Beschleunigung des Turms in einer Seite-zu-Seite-Richtung der Windkraftanlage angibt.

3. Steuereinheit nach Anspruch 1 oder Anspruch 2, wobei die Steuereinheit dazu konfiguriert ist, das Paar zueinander orthogonaler Steuersignale um einen Phasenwinkel zu verschieben, bevor die inverse m-Blatt-Koordinatentransformation angewendet wird.

4. Steuereinheit nach Anspruch 3, wobei die Steuereinheit derart konfiguriert ist, dass der Phasenwinkel basierend auf einem Betriebszustand der Windkraftanlage definiert ist; wobei optional der Betriebszustand von einem oder mehreren abhängt von: einem Blattwinkel der Rotorblätter; der Drehgeschwindigkeit des Rotors; der Windgeschwindigkeit in der Nähe der Windkraftanlage; und, falls die Windkraftanlage eine ablandige Windkraftanlage ist, einer Fehlausrichtung zwischen Windrichtung und Wellenrichtung in der Nähe der Windkraftanlage.

5. Steuereinheit nach Anspruch 3 oder Anspruch 4, wobei die Steuereinheit dazu konfiguriert ist, einen Amplitudenbegrenzungsfaktor auf das Paar zueinander orthogonaler phasenverschobener Steuersignale anzuwenden, bevor die inverse m-Blatt-Koordinatentransformation angewendet wird.

6. Steuereinheit nach Anspruch 5, wobei die Steuereinheit dazu konfiguriert ist, den Amplitudenbegrenzungsfaktor basierend auf einer Pumpkapazität einer hydraulischen Blattwinkelverstelleinrichtung der Windkraftanlage zum Einstellen des Blattwinkels der Rotorblätter zu bestimmen.

7. Steuereinheit nach einem vorstehenden Anspruch, wobei die Steuereinheit zum Erzeugen des Paares zueinander orthogonaler Signale konfiguriert ist zum:
Anwenden eines Drehvorgangs auf das Frequenzsignal, um ein gedrehtes Signal zu erhalten;
Anwenden eines Tiefpassfilters auf das gedrehte Signal, um den Frequenzanteil, der dem zyklischen 2P-Blattwinkel entspricht, und den Frequenzanteil, der dem zyklischen Turm-1P-Blattwinkel entspricht, im Frequenzsignal beizubehalten;
Anwenden eines inversen Drehvorgangs auf das gefilterte Signal, um das Paar zueinander orthogonaler Signale zu erhalten.

8. Steuereinheit nach Anspruch 7, wobei eine Frequenz eines in dem Drehvorgang verwendeten Drehwinkels eines ist von: 3P; der Turm-Eigenfrequenz; und einer gekoppelten Modenfrequenz zwischen dem Turm und einer schwimmenden Plattform, mit der der Turm gekoppelt ist.

9. Steuereinheit nach Anspruch 8, wobei der Drehwinkel 3P beträgt, wobei das gedrehte Signal 0P-Frequenzanteile, 6P-Frequenzanteile, Frequenzanteile, die einem zyklischen Turm-3P-Blattwinkel entsprechen, und Frequenzanteile, die einem zyklischen Turm+3P-Blattwinkel entsprechen, umfasst, und wobei der Tiefpassfilter angewendet wird, um die 6P-Frequenzanteile und die Frequenzanteile, die dem zyklischen Turm+3P-Blattwinkel entsprechen, zu entfernen, um das gefilterte Signal zu erhalten.

10. Steuereinheit nach einem vorstehenden Anspruch, wobei die Steuereinheit konfiguriert ist zum:
Erzeugen, basierend auf dem Frequenzsignal, eines zweiten Paares zueinander orthogonaler Signale in dem festen Koordinatenrahmen, wobei Erzeugen des zweiten Paares zueinander orthogonaler Signale Filtern beinhaltet, um Frequenzanteile, die dem zyklischen 4P-Blattwinkel entsprechen, und Frequenzanteile, die dem zyklischen Turm+1P-Blattwinkel in dem Frequenzsignal entsprechen, in dem Frequenzsignal beizubehalten, wobei die Frequenzanteile, die dem zyklischen Turm+1P-Blattwinkel entsprechen, eine Frequenz aufweisen, die der Turm-Eigenfrequenz plus 1P entspricht;
Anwenden einer zweiten Steuermaßnahme auf das zweite Paar zueinander orthogonaler Signale, um ein zweites Paar zueinander orthogonaler Steuersignale zum Mindern der Zielfrequenzanteile im Turm zu erhalten;
Kombinieren des zweiten Paares zueinander orthogonaler Steuersignale mit dem Paar zueinander orthogonaler Steuersignale, um ein kombiniertes Paar zueinander orthogonaler Steuersignale zu erhalten,
wobei die inverse m-Blatt-Koordinatentransformation auf das kombinierte Paar zueinander orthogonaler Steuersignale angewendet wird, um die einzelnen Blattwinkel-Referenzversatzwerte zu erhalten.

11. Steuereinheit nach Anspruch 10, wenn abhängig von Anspruch 7, wobei die Steuereinheit zum Erzeugen des zweiten Paares zueinander orthogonaler Signale konfiguriert ist zum:
Anwenden eines zweiten Drehvorgangs auf das Frequenzsignal, um ein zweites gedrehtes Signal zu erhalten, wobei der zweite Drehvorgang in einer entgegengesetzten Richtung zu dem ersten Drehvorgang erfolgt;
Anwenden eines zweiten Tiefpassfilters auf das zweite gedrehte Signal, um die Frequenzanteile zu behalten, die dem zyklischen 4P-Blattwinkel und dem zyklischen Turm+1P-Blattwinkel in dem Frequenzsignal entsprechen; und
Anwenden eines zweiten inversen Drehvorgangs auf das zweite gefilterte Signal, um das zweite Paar zueinander orthogonaler Signale zu erhalten.

12. Steuereinheit nach Anspruch 10 oder Anspruch 11, wobei die Steuereinheit dazu konfiguriert ist, das zweite Paar zueinander orthogonaler Steuersignale um einen zweiten Phasenwinkel zu verschieben, bevor die inverse m-Blatt-Koordinatentransformation angewendet wird; wobei optional die Steuereinheit dazu konfiguriert ist, einen zweiten Amplitudenbegrenzungsfaktor auf das zweite Paar zueinander orthogonaler phasenverschobener Steuersignale anzuwenden, bevor die inverse m-Blatt-Koordinatentransformation angewendet wird.

13. Steuereinheit nach einem der vorstehenden Ansprüche, wobei die Steuereinheit dazu konfiguriert ist, die Steuermaßnahme unter Verwendung einer integralen Steuereinheit anzuwenden; optional unter Verwendung einer proportional-integralen Steuereinheit.

14. Windkraftanlage (10), die eine Steuereinheit (20) nach einem vorstehenden Anspruch umfasst; wobei die Windkraftanlage optional eine ablandige Windkraftanlage ist, wobei der Turm mit einer schwimmenden Plattform (12) gekoppelt ist, und wobei die Turm-Eigenfrequenz eine gekoppelte Modenfrequenz zwischen dem Turm (102) und der schwimmenden Plattform (12) ist.

15. Verfahren (50) zum Steuern einer Windkraftanlage (10), die drei Rotorblätter (106) aufweist, wobei das Verfahren umfasst:
Empfangen (501) eines Sensorsignals, das eine Beschleunigung eines Turms (102) der Windkraftanlage in einer Vorwärts-Rückwärtsrichtung der Windkraftanlage angibt, wobei das Sensorsignal von einem oder mehreren Sensoren an einer Oberseite des Turms (102) oder in einer Gondel (104) der Windkraftanlage empfangen wird;
Bestimmen (502) eines Frequenzsignals in einem festen Koordinatenrahmen der Windkraftanlage, der Frequenzanteile im empfangenen Sensorsignal beinhaltet, das sich in einem definierten Frequenzbereich befindet, **dadurch gekennzeichnet, dass** der definierte Frequenzbereich 3P-Frequenzanteile und Turm-Eigenfrequenzanteile beinhaltet; und **dadurch gekennzeichnet, dass** das Verfahren weiter umfasst:
Erzeugen (503), basierend auf dem Frequenzsignal, eines Paares zueinander orthogonaler Signale in dem festen Koordinatenrahmen, wobei Erzeugen des Paares zueinander orthogonaler Signale Filtern beinhaltet, um Frequenzanteile, die dem zyklischen 2P-Blattwinkel entsprechen, und Frequenzanteile, die dem zyklischen Turm-1P-Blattwinkel entsprechen, in dem Frequenzsignal beizubehalten, wobei der Frequenzanteil, der dem zyklischen Turm-1P-Blattwinkel entspricht, eine Frequenz von der Turm-Eigenfrequenz minus 1P aufweist;
Anwenden (504) einer Steuermaßnahme auf das Paar zueinander orthogonaler Signale, um ein Paar zueinander orthogonaler Steuersignale zum Mindern der Zielfrequenzanteile im Turm zu erhalten;
Anwenden (505) einer inversen m-Blatt-Koordinatentransformation auf das Paar zueinander orthogonaler Steuersignale, um individuelle Blattwinkel-Referenzversatzwerte für die jeweiligen Rotorblätter in einem Rotorkoordinatenrahmen der Windkraftanlage zu erhalten; und
Einstellen (506) des Blattwinkels der Rotorblätter basierend auf den erhaltenen individuellen Blattwinkel-Referenzversatzwerten.

## Revendications

1. Dispositif de commande (20) pour une éolienne (10) présentant trois pales de rotor (106), le dispositif de commande étant destiné à ajuster le calage individuel des trois pales de rotor, le dispositif de commande étant configuré pour :
recevoir (501) un signal de capteur indicatif de l'accélération d'une tour (102) de l'éolienne dans une direction avant-arrière de l'éolienne, dans lequel le signal de capteur est reçu d'un ou plusieurs capteurs au sommet de la tour (102) ou dans une nacelle (104) de l'éolienne ;
déterminer (502) un signal de fréquence dans un système de coordonnées fixe de l'éolienne qui inclut le contenu de fréquence du signal de capteur reçu qui est dans une région de fréquence définie, **caractérisé en ce que** la région de fréquence définie inclut le contenu de fréquence 3P et le contenu de fréquence naturelle de tour ; et **caractérisé en ce que** le dispositif de commande est en outre configuré pour :
générer (503), sur la base du signal de fréquence, une paire de signaux mutuellement orthogonaux dans le système de coordonnées fixe, dans lequel la génération de la paire de signaux mutuellement orthogonaux comprend le filtrage pour conserver le contenu de fréquence correspondant au calage cyclique 2P et le contenu de fréquence correspondant au calage cyclique de tour -1P, dans le signal de fréquence, dans lequel le contenu de fréquence correspondant au calage cyclique de tour -1P présente une fréquence de la fréquence naturelle de tour moins 1P ;
appliquer (504) une action de commande à la paire de signaux mutuellement orthogonaux pour obtenir une paire de signaux de commande mutuellement orthogonaux pour atténuer le contenu de fréquence cible dans la tour ;
appliquer (505) une transformation inverse de coordonnées de pale m à la paire de signaux de commande mutuellement orthogonaux pour obtenir des valeurs de décalage de référence de calage individuel pour les pales de rotor respectives dans un système de coordonnées de rotor de l'éolienne ; et,
transmettre un signal de commande pour ajuster (506) le calage des pales de rotor sur la base des valeurs de décalage de référence de calage individuel obtenues.

2. Dispositif de commande selon la revendication 1, dans lequel le signal de capteur reçu est indicatif de l'accélération de la tour dans une direction latérale de l'éolienne.

3. Dispositif de commande selon la revendication 1 ou la revendication 2, le dispositif de commande étant configuré pour déphaser la paire de signaux de commande mutuellement orthogonaux autour d'un angle de phase avant que la transformation inverse des coordonnées de la pale m ne soit appliquée.

4. Dispositif de commande selon la revendication 3, dans lequel le dispositif de commande est configuré de sorte que l'angle de phase soit défini sur la base d'une condition de fonctionnement de l'éolienne ; facultativement, dans lequel la condition de fonctionnement est une fonction d'un ou de plusieurs parmi : l'angle de calage des pales de rotor ; la vitesse de rotation du rotor ; la vitesse du vent à proximité de l'éolienne ; et, si l'éolienne est une éolienne en mer, un désalignement entre la direction du vent et la direction des vagues à proximité de l'éolienne.

5. Dispositif de commande selon la revendication 3 ou la revendication 4, le dispositif de commande étant configuré pour appliquer un facteur de limitation d'amplitude à la paire de signaux de commande déphasés mutuellement orthogonaux avant l'application de la transformation inverse des coordonnées de la pale m.

6. Dispositif de commande selon la revendication 5, dans lequel le dispositif de commande est configuré pour déterminer le facteur de limitation d'amplitude sur la base de la capacité de pompe d'un système de calage hydraulique de l'éolienne pour ajuster le calage des pales de rotor.

7. Dispositif de commande selon une quelconque revendication précédente, dans lequel pour générer la paire de signaux mutuellement orthogonaux, le dispositif de commande est configuré pour :
appliquer une opération de rotation au signal de fréquence pour obtenir un signal pivoté ;
appliquer un filtre passe-bas au signal pivoté pour conserver le contenu de fréquence correspondant au calage cyclique 2P et le contenu de fréquence correspondant au calage cyclique de tour -1P dans le signal de fréquence ;
appliquer une opération de rotation inverse au signal filtré pour obtenir la paire de signaux mutuellement orthogonaux.

8. Dispositif de commande selon la revendication 7, dans lequel une fréquence d'un angle de rotation utilisé dans l'opération de rotation est l'une des suivantes : 3P ; la fréquence naturelle de tour ; et une fréquence de mode couplé entre la tour et une plateforme flottante, à laquelle la tour est couplée.

9. Dispositif de commande selon la revendication 8, dans lequel l'angle de rotation est 3P, dans lequel le signal pivoté comprend un contenu de fréquence 0P, un contenu de fréquence 6P, un contenu de fréquence correspondant au calage cyclique de tour -3P et un contenu de fréquence correspondant au calage cyclique de tour +3P, et dans lequel le filtre passe-bas est appliqué pour supprimer le contenu de fréquence 6P et le contenu de fréquence correspondant au calage cyclique de tour +3P pour obtenir le signal filtré.

10. Dispositif de commande selon une quelconque revendication précédente, le dispositif de commande étant configuré pour :
générer, sur la base du signal de fréquence, une seconde paire de signaux mutuellement orthogonaux dans le système de coordonnées fixe, dans lequel la génération de la seconde paire de signaux mutuellement orthogonaux inclut le filtrage pour conserver le contenu de fréquence correspondant au calage cyclique 4P et le contenu de fréquence correspondant au calage cyclique +1P, dans le signal de fréquence, dans lequel le contenu de fréquence correspondant au calage cyclique de tour +1P présente une fréquence égale à la fréquence naturelle de tour plus 1P ;
appliquer une seconde action de commande à la seconde paire de signaux mutuellement orthogonaux pour obtenir une seconde paire de signaux de commande mutuellement orthogonaux pour atténuer le contenu de fréquence cible dans la tour ;
combiner la seconde paire de signaux de commande mutuellement orthogonaux avec la paire de signaux de commande mutuellement orthogonaux pour obtenir une paire combinée de signaux de commande mutuellement orthogonaux,
dans lequel la transformation inverse des coordonnées de la pale m est appliquée à la paire combinée de signaux de commande mutuellement orthogonaux pour obtenir les valeurs de décalage de référence de calage individuel.

11. Dispositif de commande selon la revendication 10, lorsqu'elle dépend de la revendication 7, dans lequel pour générer la seconde paire de signaux mutuellement orthogonaux, le dispositif de commande est configuré pour :
appliquer une seconde opération de rotation au signal de fréquence pour obtenir un second signal tourné, dans lequel la seconde opération de rotation est dans le sens opposé à l'opération de rotation ;
appliquer un second filtre passe-bas au second signal pivoté pour conserver le contenu de fréquence correspondant au calage cyclique 4P et au calage cyclique de tour +1 P dans le signal de fréquence ; et,
appliquer une seconde opération de rotation inverse au second signal filtré pour obtenir la seconde paire de signaux mutuellement orthogonaux.

12. Dispositif de commande selon la revendication 10 ou la revendication 11, le dispositif de commande étant configuré pour déphaser la seconde paire de signaux de commande mutuellement orthogonaux autour d'un second angle de phase avant l'application de la transformation inverse des coordonnées de la pale m ; facultativement dans lequel le dispositif de commande est configuré pour appliquer un second facteur de limitation d'amplitude à la seconde paire de signaux de commande mutuellement orthogonaux déphasés avant l'application de la transformation inverse des coordonnées de la pale m.

13. Dispositif de commande selon une quelconque revendication précédente, dans lequel le dispositif de commande est configuré pour appliquer l'action de commande à l'aide d'un dispositif de commande intégral ; facultativement, d'un dispositif de commande proportionnel-intégral.

14. Éolienne (10) comprenant un dispositif de commande (20) selon une quelconque revendication précédente ; facultativement, dans laquelle l'éolienne est une éolienne en mer, dans laquelle la tour est couplée à une plateforme flottante (12), et dans laquelle la fréquence naturelle de tour est une fréquence de mode couplé entre la tour (102) et la plateforme flottante (12).

15. Procédé (50) de commande d'une éolienne (10) présentant trois pales de rotor (106), le procédé comprenant :
la réception (501) d'un signal de capteur indicatif de l'accélération d'une tour (102) de l'éolienne dans une direction avant-arrière de l'éolienne, dans lequel le signal de capteur est reçu d'un ou plusieurs capteurs au sommet de la tour (102) ou dans une nacelle (104) de l'éolienne ;
la détermination (502) d'un signal de fréquence dans un système de coordonnées fixe de l'éolienne qui inclut le contenu de fréquence du signal de capteur reçu qui est dans une région de fréquence définie, **caractérisé en ce que** la région de fréquence définie inclut le contenu de fréquence 3P et le contenu de fréquence naturelle de tour ; et **caractérisé en ce que** le procédé comprend en outre :
la génération (503), sur la base du signal de fréquence, d'une paire de signaux mutuellement orthogonaux dans le système de coordonnées fixe, dans lequel la génération de la paire de signaux mutuellement orthogonaux inclut le filtrage pour conserver le contenu de fréquence correspondant au calage cyclique 2P et le contenu de fréquence correspondant au calage cyclique de tour -1P, dans le signal de fréquence, dans lequel le contenu de fréquence correspondant au calage cyclique de tour -1P présente une fréquence égale à la fréquence naturelle de tour moins 1P ;
l'application (504) d'une action de commande à la paire de signaux mutuellement orthogonaux pour obtenir une paire de signaux de commande mutuellement orthogonaux pour atténuer le contenu de fréquence cible dans la tour ;
l'application (505) d'une transformation inverse de coordonnées de la pale m à la paire de signaux de commande mutuellement orthogonaux pour obtenir des valeurs de décalage de référence de calage individuel pour les pales de rotor respectives dans un système de coordonnées de rotor de l'éolienne ; et,
l'ajustement (506) du calage des pales du rotor sur la base des valeurs de décalage de référence de calage individuel obtenues.
